# EUROPEAN PATENT APPLICATION

(11) **EP 4 717 379 A1**
(43) Date of publication of application: **01.04.2026**
(21) Application number: 24202421.4
(22) Date of filing: 25.09.2024
(51) Int. Cl.: B22F 10/68, B33Y 40/20, B22F 10/28, B33Y 10/00

(54) **FREQUENCY CONTROL FOR DE-POWDERING IN ADDITIVE MANUFACTURING**

(71) Applicant: Siemens Energy Global GmbH & Co. KG, 81739 München (DE)
(72) Inventor: Turner, Steve, Worcester, DY139RZ (GB); Schurb, Julius, 14169 Berlin (DE)

(57) **Abstract**

A method of determining an effective operating frequency (F) for de-powdering in additive component manufacturing is presented. The method comprising the steps of, (i), measuring a time signal (f(t)) during a de-powdering process, wherein remaining powder (1) is being removed from a given cavity (2) of the component (3), (ii), transmitting the signal (f(t)) to a data acquisition device (12), (iii), converting the time signal (f(t)) by means of a Fast Fourier Transformation (FFT) into a frequency spectrum (F), and (iv), determining at least a portion of this frequency spectrum (F) as a reference for subsequent de-powdering step. Moreover, a related apparatus is presented.

## Description

The present invention relates to a method of determining an effective or actual operating frequency or as the case may be a control method for (automated) de-powdering processes in additive component manufacturing, preferably for powder-bed-based methods. The de-powdering is preferably facilitated by mechanical excitation.

Preferably, the component denotes a component of a turbo machine, e.g. applied in the flow path hardware of a gas turbine, like a van or burner component. In the alternative, the component may pertain to a high-performance component in general, such as a component applied in power generation, in the aviation or the automotive industry.

Additive manufacturing (AM) or 3D-printing techniques comprise e.g. powder-bed-fusion methods, such as selective laser melting (SLM) or laser powder bed fusion (LPBF), selective laser sintering (SLS) and electron beam melting (EBM). Additive manufacturing, particularly such powder-bed methods have proven to be useful and advantageous in the fabrication of prototypes or complex components, such as components with filigree structure or functionally cooled components. Further, the additive manufacture stands out for its short chain of process steps which in turn enables material economization and a particularly low lead time.

Further additive manufacturing approaches relate to "Directed Energy Deposition (DED)", such as laser cladding, electron beam or plasma welding, metal inkjet molding (MIM), so-called sheet lamination methods, or even thermal spraying (VPS, LPPS) methods.

Related powder-bed machine hardware or setups usually comprise a manufacturing or build platform on which the component is built layer-by-layer after the feeding of a layer of base material which may then be melted, e.g. by an energy beam, such as a laser and subsequently solidified. The layer thickness is determined by a recoater that moves, e.g. automatically, over the powder bed and removes excess material from a manufacturing plane or build space. Typical layer thicknesses amount to between 20 µm and 40 pm. During the manufacture, said energy beam scans over the surface and melts the powder on selected areas which may be predetermined by a CAD-file according to the geometry of the component to be manufactured. Said scanning or irradiation is preferably carried out in a computer-assisted way, such as Computer-Aided-Manufacturing (CAM) instructions, which may be present in the form of a dataset. Said dataset or CAM-file may be or refer to a computer program or computer program product.

Additive Manufacturing well enables complex geometries to be manufactured, like intricate design involving channels or cavities. The subsequent separation of the part or component from a supporting build plate and removal of remaining powder in its cavities is thus key to be performed particularly prior to any heat treatment in order to avoid sintering of powder residuals thereby clogging channels which results in scrapping of the part.

Therefore, commercial solutions are developed which rotate the part or component and facilitate the so-called de-powdering by shaking or exerting a vibration via a pneumatic or (piezo)electric actuator.

A method of removing a powdery base material from layerwise manufactured objects is described in EP 3 533 538 A1, for example.

The control of the actuators is usually driven via a pneumatic valve which controls the mass flow of the shaker and excites or accelerates the part accordingly. The control variable is usually the pneumatic pressure of the valve. The problem of the situation is the fact that the part acceleration cannot be directly measured or controlled, which is however a crucial process variable to remove residual powder from the parts. Additionally, in cases where a "desired" acceleration results in a favorable frequency mode and leads to a cleaner part, a related variable needs to be identified.

It is not possible to transfer this (coincidentally identified) variable to another piece of equipment since state-of-the-art control only allows to tune the pressure valve, but not (directly) the acceleration; not to mention the frequency, since the response is dependent on multiple factors like the machine conditions and setup, particularly the status of wearing, of bearing clearances, the filling status of powder, the material, the eigenfrequencies of the build plate and/or the component itself, just to name a few examples.

Wherein the solution described in the above-mentioned reference may be optimized for best de-powdering results, the above-described problems could not be solved.

It is, thus, an object of the present invention to provide means that help to overcome the above-mentioned problems and particularly to open an analytic methodology to transfer (optimized) de-powdering strategies from one additive manufacturing and/or de-powdering machine to another and thereby exploiting the essential insights of de-powdering in industrialized additive manufacturing.

The mentioned object is achieved by the subject-matters of the independent claims. Advantageous embodiments are subject-matters of the dependent claims.

An aspect of the present invention relates to a method of determining an effective operating frequency of frequency spectrum for automated, semiautomated and/or industrial de-powdering in additive manufacturing by mechanical excitation.

The term "effective" shall denotes in the present context a frequency, an actual or measurable frequency range or frequency boundary, and does preferably not pertain to a set value of frequency or excitation which may e.g. be adjusted as a user input in a given de-powdering setup.

The method comprises measuring a time signal, like a time-dependent signal, being preferably non-constant in the time domain during a de-powdering process, wherein remaining raw material or powder is being removed from a cavity of a given component (in the as-manufactured state). The signal may preferably pertain to a signal that it discrete in time, like a frequency response from an agitation or shaking process. The time signal may as well pertain to an acceleration and/or a velocity.

The method further comprises transmitting the signal to a data acquisition device.

The method further comprises converting the time signal by means of a Fast Fourier Transformation into a frequency spectrum or frequency value.

The method further comprises determining at least a portion or boundary of the frequency spectrum as an (ideal) working point or preferably as a reference for a subsequent de-powdering step, additive manufacturing build job or the like.

The presented methodology advantageously allows to provide for a clear, accurate and reproducible frequency setpoint or variable in real time which can serve as a working point that can be fed back to the de-powdering set up and/or a subsequent de-powdering job, such as a later manufacturing job of a given manufacturing lot. Thereby, a reproducible route for reliable de-powdering results is provided which is rendered independent of a given de-powdering status or set up. Instead, full process control and related (off-line) analysis of additive manufacturing post-processing is provided. This in turn, allows for full component traceability and continued process improvement, such as when automated or industrialized additive manufacturing is concerned.

In an embodiment the mentioned de-powdering process is or has already been optimized in terms of its de-powdering output in a proven set up. Such proven de-powdering setup may relate as well to an optimized parameter set, e.g. comprising a de-powdering, agitation or shaking stimulus that provided the best de-powdering results in the past. Provided that a reliable optimized or promising de-powdering result is taken as a basis for the determination of the effective operating frequency, the reference value will instantly allow to be used as a working point, when another component needs to be freed from residual powder in the given manner.

In an embodiment the de-powdering process of the component is carried out while the component is still fixed to a supporting or underlying build plate, i.e. prior to any related separation of the part. It is described above that such separation is preferably only performed after a given component's interior has been sufficiently freed from any residual powder in order to avoid clogging of channels which may lead to wastage of the part.

In an embodiment the mechanical excitation is carried out by a piezoelectric or a pneumatic excitation, such as by using air pressure and e.g. a related air pressure valve for controlling the excitation or related (air) mass flow control.

A valve position is - according to another embodiment - changed until an excitation in the subsequent de-powdering step corresponds to the reference frequency. By these means an advantageous the valuable insights and information obtained from the determination of the operating frequency can be passed on to and exploited in a subsequent build job and the whole process chain improved accordingly.

In an embodiment, a determination algorithm is applied which determines a frequency or frequency spectrum as the reference beyond or remote from an eigenfrequency of the agitation system (i.e. build plate with fixed component and powder retained therein). This is done e.g. automatically or semiautomatically. Picking frequencies remote or beyond any eigenfrequency of the setup brings the advantage to avoid any part destruction of delamination due to a resonant excitation of filigree or fragile sections of the component.

In yet another embodiment, during or for the determining, a gradient of the converted (FFT response) signal is recorded or gathered over time. This might help to derive insights on the de-powdering state of the related part or component, e.g. an insight on how much or whether all powder is actually being removed from the interior.

The time signal is in a first embodiment measured by an acceleration sensor which is either attached to the additive manufacturing machine, the component, and/or to a supporting build plate. All these mountings basically allow to gain insights of the time signal, wherein attaching the sensor to the component will probably bring the most accurate results. However, also attaching the sensor to the base plate may have advantages, namely that fixation or handling may be easier, and the response might anyway be very similar due to the monolithic or adhesive bond between the component and the build plate as is inherently the case in powder bed based additive manufacturing.

It has been found out that the usage of an acceleration sensor is particularly accurate and allows to exclude variable parameters in the set up like the machine's status, the clamping system, the degradation, bearing clearances and the like. In other words, the measurement can be rendered independent of any wearing situation of any hardware during the de-powdering.

In an alternative embodiment, the time signal is measured by laser scanning vibrometry. According to this option, the inherent advantages of laser-based detection of time signals like vibration and the like can be exploited. Likewise, by these means, and accurate signal measurement is possible.

As in many instances, the plenty of data rendered during additive manufacturing, and its pre-and post-processing steps, are collected during a corresponding monitoring. According to an embodiment of this invention, the time signal and/or the determined reference frequency or reference frequency spectrum is considered and incorporated in an additive manufacturing process monitoring scheme as well. By this non-trivial measure, the signal data collected during the inventive process, i.e. during the manufacturing and/or de-powdering, is correlated e.g. with other monitoring data, like optical image detection, thermographic image detection, or AI-based monitoring and defect detection schemes. The mentioned signal data collected can then be fed back into another or subsequent additive manufacturing process preparation steps, like CAM means.

Owed to such a functionality, the underlying manufacturing in the de-powdering process can be improved from the outset, i.e. it could already be accounted for in the component design phase, involving CAD or CAM.

In an embodiment, the data acquisition device is used to exchange data with an ancillary equipment, such as a bandsaw or any suitable equipment that could generate a harmonic or anharmonic frequency or resonance from its operation. The bandsaw or its related blade could, besides electrostatic discharging approaches, be used to effectively cut the AM component from the related build plate, thereby generating specific (harmonic) signals.

A further aspect of the present invention relates to an apparatus or setup that is suitable to carry out the described method, wherein the apparatus comprises a means for measuring the time signal, such as by the described acceleration sensor or laser vibrometry measurement, a data acquisition device and a conversion unit, wherein the conversion unit is suitable to convert the signal by means of the FFT into the frequency domain.

The data acquisition device is hence set up to capture and store the data and to interact and exchange data with all features of the apparatus, a related de-powdering set-up and/or an additive manufacturing machine, in which the component is established.

To this effect, the data acquisition device has preferably the scope and ability to capture and store the data internally and to be networked if required from all the areas mentioned within the additive manufacturing process chain, including pre-and post-processing.

Advantages and embodiments relating to the described method are valid or pertain likewise to the apparatus as described, and vice versa.

Further, features and advantageous embodiments become apparent from the following description of the exemplary embodiment in connection with the Figures.
Figure 1 schematically exemplifies a de-powdering set up in which additively manufactured components may be removed from remaining or trapped powder.
Figure 2 shows more specifically an exemplary AM-component comprising a cavity in the shape of a channel in which loose powder particles remain and clog the channel as a process inherent artifact.
Figure 3 illustrates the process of the present invention by way of several schematic sketches.

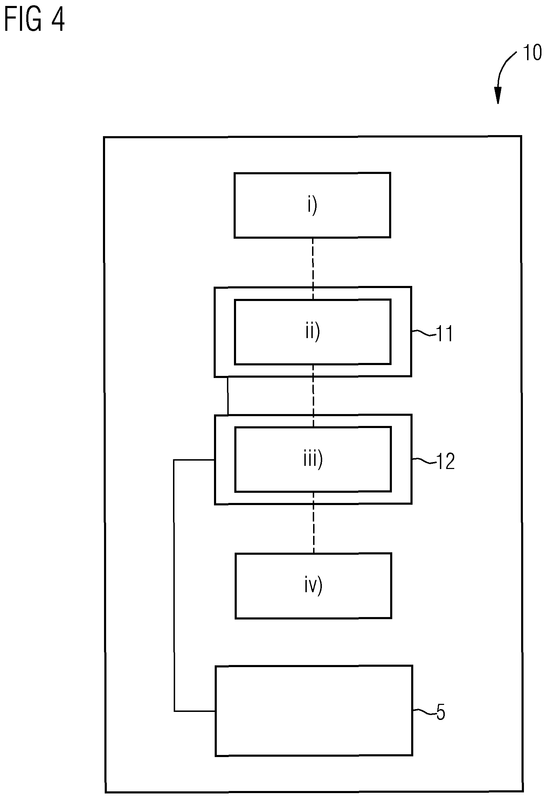

Finally, Figure 4 summarize by way of schematic flow chart, the inventive method steps.

Like elements, elements of the same kind and identically acting elements may be provided with the same reference numerals in the Figures. The Figures are not necessarily depicted true to scale and may be scaled up or down to allow for a better understanding of the illustrated principles. Rather, the described Figures are to be construed in a broad sense and as a qualitative base which allows a person skilled in the art to apply the presented teaching in a versatile way.

The term "and/or" as used herein shall mean that each of the listed elements may be taken alone or in conjunction with two or more of further listed elements.

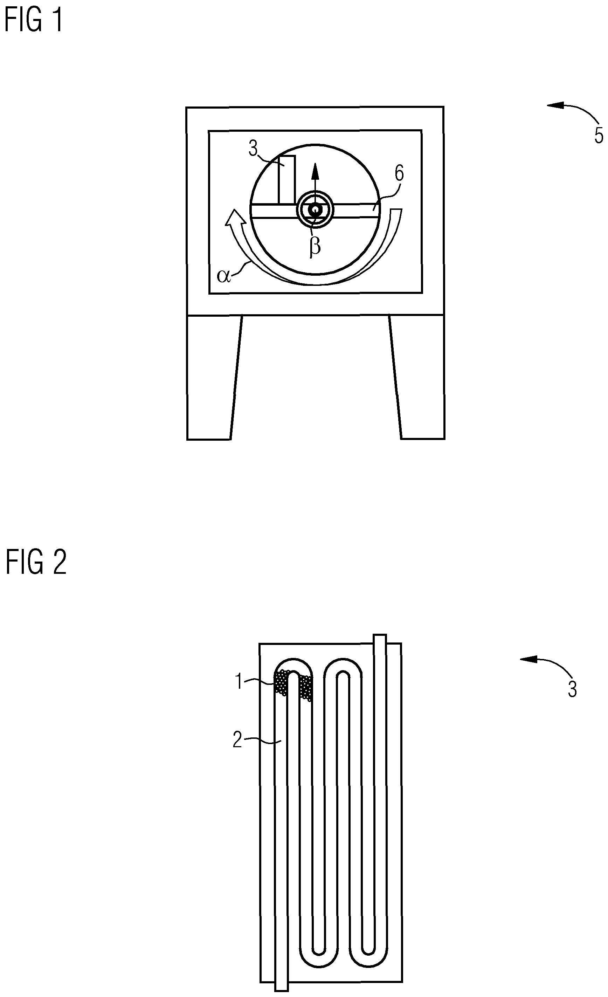

Figure 1 indicates a de-powdering machine set-up 5. The set up may be part of a conventional equipment for de-powdering of additive manufactured components which inherently contain residual powder directly after the build-up, at least in cases wherein powder bed fusion methods are applied. It is shown that the machine 5 comprises a chamber with a rotatable build plate 6 and, attached (welded) to it, the component or part 3.

An agitation of the part 3 - via the build plate 6 - is preferably exerted by means of air pressure, a piezoelectric or any other mechanical or electro-mechanical excitation, such as by eccentric motors or the like. Preferably, however, the build plate is shaken by way of an air pressure and a related valve (cf. numeral 7 below) pneumatically.

Additionally or alternatively, the build plate may be rotated, such as rotated by or around two orthogonal rotational axes, in order to apply specifically tailored de-powdering movements in the de-powdering program which serves to reliably free the parts from any remaining powder. These two linearly independent rotational axes are exemplarily denoted with the angles α and β.

An exemplary component geometry is shown in particular in Figure 2. Here, a cross-sectional view of a simple component design is shown with a meandering channel that is partly clogged or filled with remaining powder particles 1.

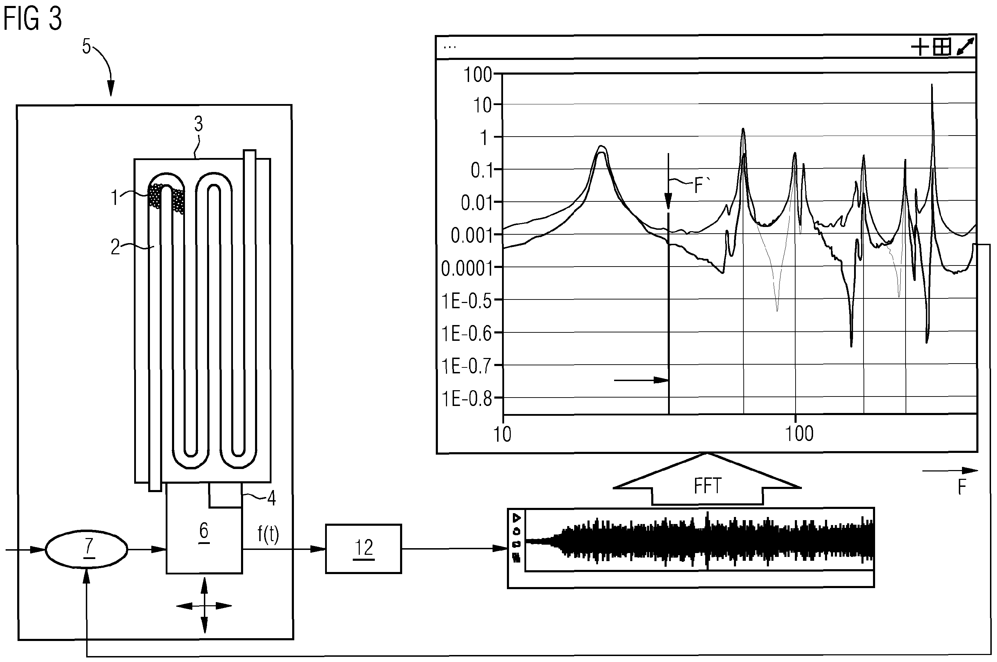

Figure 3 shows such component design in the middle part mounted to a build plate 6 that is being subjected to the described excitation.

The whole scheme of Figure 3 introduces at least parts of the inventive determining functionality. Whereas an air pressure or valve 7 can be controlled to tailor the excitation, such as in terms of various forces, amplitudes, frequencies and angles (like indicated by the two crossing double arrows), the present invention proposes to measure an acceleration as a time or time-dependent signal f(t) in step (i) which is further outlined by way of Figure 4 and its description below.

The recorded signal is then fed and/or stored in a data acquisition device or storage unit 12. The data acquisition device 12 is preferably set up to capture and store the data and to interact and exchange data with all features of the higher-ranking unit, like the inventive apparatus 10, which will be described further below, the de-powdering set-up 5 or any other additive manufacturing machine, which is presently not explicitly indicated in the figures.

The bottom of the right part in Figure 3 shows a schematic of the time signal f(t) by way of example. This signal record is then, according to the invention, transformed via so-called Fast Fourier Transformation (FFT) into its distinct frequency spectrum or distinct frequencies, as are indicated by F' in the upper part on the right side of Figure 3.

It is apparent that these frequencies F' denote effective operating frequencies which are obtained independent of any setpoint and independent of the de-powdering system's status. Hence these frequencies serve as a reliable working-point reference for any further de-powdering steps.

Consequently, this effective or actual frequency (working point) could be monitored or correlated with and/or fed back to any subsequent pre- or post-processing software and/or hardware in additive manufacturing technology, and e.g. be controlled via a closed-loop in another or subsequent de-powdering step. For instance, another de-powdering time signal can be monitored, and the related excitation variable, like the air pressure, be varied until the related excitation corresponds to the effective reference frequency as a working point.

The data acquisition device 12 can - even though this is not explicitly indicated in the Figures - be used to exchange data with an ancillary equipment such as a bandsaw or any suitable equipment that could generate a harmonic frequency or resonance from its' operation.

In other words, the main technical feature which facilitates solving the above-described technical problem is the measuring and processing of the time signal. This might for instance imply the addition of an acceleration sensor which is attached to the component's most relevant features or to the substrate plate and which finally transmits the signal to a data acquisition and converts the signal by means of the Fast Fourier Transformation (FTT) into a frequency spectrum with its distinct peaks. Based on the distinct peaks measured in Hz of the excitation or acceleration, the measured value can be used across multiple machines by transferring the same procedure to another setup thereby ensuring that the same conditions/frequencies are hit over time.

So far (cf. EP 3 533 538 A1 as mentioned above) the pneumatic or piezoelectric actuators are controlled with the target of optimizing the powder removal, which could either lead to undesired frequencies damaging delicate parts and/or structures by hitting the eigenfrequency. If, in contrast, no excitation mode is met at all, this would mean that powder is prevented from being moved closer to an outlet such that the removal is facilitated.

The outlined invention would on the other hand give the ability to monitor and control the frequencies of the part and/or features, e.g. by an attached sensor, independently of the set actuator frequency and the machine condition and could, hence, reliably be applied across multiple machines and factories.

Instead of a mechanical, such as MEMS-based acceleration sensor, also a laser (scanning) vibrometry measurement could be deployed. With such an approach a non-contact vibration measurement of a given surface can be performed, wherein a laser beam is aimed at the target surface, and the vibration amplitude, time, acceleration and/or frequency are measured or derived by analyzing the Doppler shift in the frequency of the reflected laser beam caused by the surface's motion.

The provided functionality could e.g. be based on or embedded in a (determination) algorithm which (automatically or semiautomatically) picks a frequency F or frequency spectrum as the reference, which preferably lies sufficiently beyond the eigenfrequencies of the agitated system. This is particularly to reduce part destruction and/or support detachment.

Also, e.g. during or for the determining step, a gradient of the converted signal, i.e. the FFT response, is gathered or recorded over time. This might help to gain deeper insights of the de-powdering behaviour of the system, thereby determining whether or not and how effectively the powder could have been removed.

Figure 4 finally summarizes the inventive methods steps by way of a simple flow chart and a sketch of an apparatus 10. The apparatus 10 is set up and suitable to carry out the method as described. The apparatus 10 comprises a means 4 for measuring the time signal f(t), a conversion unit 11 and a data acquisition device 12.

The conversion unit 11 is suitable to convert the signal f(t) by means of a Fast Fourier Transformation FFT into the frequency domain F.

The method for determining an effective operating frequency F for de-powdering in additive component manufacturing by mechanical excitation, comprises, (i), measuring a time signal f(t) during a de-powdering process, wherein remaining powder 1 is being removed from a given cavity 2 of the component 3.

Whereas step (ii) requires the method to transmit the signal f(t) to a data acquisition device 12, (iii) denotes converting the time signal f(t) by means of FFT into a frequency spectrum F.

Finally, under (iv), the method comprises determining at least a portion of this frequency spectrum F as a reference for a subsequent de-powdering step.

The component as referred to herein may particularly relate to a part or an article of complex shape, such as with filigree portions of structures. Preferably, said component is made of a high-performance material, such as a material of great strength and/or thermal resistivity. Particularly, said part may constitute a part of a steam or gas turbine component, such as a blade, vane, shroud, shield, such as heat shield, tip, segment, insert, injector, seal, transition, burner, nozzle, strainer, orifice, liner, distributor, dome, boost, cone, lance, plate, resonator, piston or any corresponding retrofit kit. Alternatively, said component may relate to another or similar component.

## Claims

1. A method of determining an effective operating frequency (F) for de-powdering in additive component manufacturing by mechanical excitation, the method comprising the steps:
- (i) measuring a time signal (f(t)) during a de-powdering process, wherein remaining powder (1) is being removed from a given cavity (2) of the component (3),
- (ii) transmitting the signal (f(t)) to a data acquisition device (12),
- (iii) converting the time signal (f(t)) by means of a Fast Fourier Transformation (FFT) into a frequency spectrum (F), and
- (iv) determining at least a portion of this frequency spectrum (F) as a reference for a subsequent de-powdering step.

2. The method according to claim 1, wherein the mentioned de-powdering process is optimized in terms of its de-powdering output in a proven de-powdering setup (5).

3. The method according to claim 1 or 2, wherein the de-powdering process of the component (3) is carried out while the component (3) is still fixed to a supporting build plate (6) .

4. The method according to one of the previous claims, wherein the mechanical excitation is carried out by a piezoelectric and/or pneumatic excitation, such as by using air pressure and a valve (7) for controlling the excitation.

5. The method according to claim 4, wherein a valve position is changed until an excitation in the subsequent de-powdering step corresponds to the reference frequency.

6. The method according to one of the previous claims, wherein a determination algorithm is applied which determines a frequency (F) or frequency spectrum as the reference beyond an Eigenfrequency of the system.

7. The method according to one of the previous claims, wherein during the determining a gradient of the converted signal is recorded over time.

8. The method according to one of the previous claims, wherein the time signal (f(t)) is measured by an acceleration sensor (4) which is either attached to the additive manufacturing machine, the component (3), or a supporting build plate (6).

9. The method according to one of the previous claims, wherein the time signal is measured by laser vibrometry.

10. The method according to one of the previous claims, wherein the time signal (f(t)) and/or the determined reference frequency (F) is considered and incorporated in an additive manufacturing process monitoring scheme.

11. The method according to claim 10, wherein the signal data collected during the process is correlated with other monitoring data, and fed back into subsequent additive manufacturing process preparation (CAM).

12. The method to one of the previous claims, wherein
the data acquisition device (12) is used to exchange data with an ancillary equipment such as a bandsaw or any suitable equipment that could generate a harmonic frequency or resonance from its' operation.

13. An apparatus (10) set up to carry out the method according to one of the previous claims, the apparatus (10) further comprising a means (4) for measuring the time signal (f(t)), a data acquisition device (12) and a conversion unit (11), wherein the conversion unit (11) is suitable to convert the signal (f(t)) by means of a Fast Fourier Transformation (FFT) into the frequency domain (F).

14. The apparatus (10) according to claim 13, wherein the data acquisition device (12) is set up to capture and store the data and to interact and exchange data with all features of the apparatus (10), a related de-powdering setup (5) and/or an additive manufacturing machine.
